# EUROPEAN PATENT SPECIFICATION

(11) **EP 2 848 167 B1**
(45) Date of publication and mention of the grant of the patent: **27.11.2019**
(21) Application number: 13730956.3
(22) Date of filing: 09.05.2013
(51) Int. Cl.: A47J 31/36, A47J 31/00

(54) **SYSTEM FOR THE PREPARATION OF BEVERAGES WITH STORAGE MEANS AND MEANS FOR SUPPLYING INDIVIDUAL DOSES AND PROCESS OF OPERATION OF SAID SYSTEM**
SYSTEM ZUR ZUBEREITUNG VON GETRÄNKEN MIT MITTEL ZUM LAGERN UND ZUFÜHREN VON EINZELNEN DOSEN SOWIE VERFAHREN ZUM BETRIEB DIESES SYSTEMS
SYSTÈME DE PRÉPARATION DE BOISSONS AVEC MOYENS DE RANGEMENT ET D'ALIMENTATION EN DOSES INDIVIDUELLES, ET PROCÉDÉ DE FONCTIONNEMENT DUDIT SYSTÈME

(30) Priority: 09.05.2012 PT 2012106300
(43) Date of publication of application: 18.03.2015
(73) Proprietor: Novadelta-Comércio e Industria de Cafés, Lda., 1950-041 Lisboa (PT)
(72) Inventor: NABEIRO, Rui Miguel, P-7370-112 Campo Maior (PT)
(74) Representative: Miranda de Sousa, João Paulo Vaz
(86) International application number: PCT/PT2013/000031
(87) International publication number: WO 2013/169134

(56) References cited:
- WO-A1-2012/104125
- WO-A1-2013/110650
- GB-A- 2 266 228
- US-A- 2 939 380
- US-A- 3 213 777

## Description

### Field of the invention

The present invention refers to the field of systems for preparation of beverages based upon the extraction of aromatic substances, such as for example coffee of espresso type, tea, and similar. The present invention refers in particular to systems with storage and supply means for a plurality of individual doses provided in a conduction support in the form of band or similar, to be successively supplied to a respective extraction device.

The present invention further refers to a process for operation of the system for preparation of beverages according to the invention.

### Background of the invention

According to an approach known in prior art, the individual doses are provided in a common conduction support, for example in form of band or similar, which is displaced by means of a respective actuation mechanism so as to be successively supplied to an extraction device. Examples are disclosed by documents US 3,812,273, US 2939380 A, GB 2266228 A, WO97/ 17006, EP 0832592 A1 and EP 1541070 B1. This approach presents advantages in terms of the control of movement relatively to the alternative in which the doses are provided separate from each other. However, the known solutions present a disadvantageous disposition of said conduction supports relative to a respective extraction device, including several "elbows" of direction change and even of change of the movement plane. Moreover, some solutions point to the use of several actuation mechanisms, resulting in high complexity and therefore being less appropriate for the type of use related with professional machines in cafeterias and restaurants.

Moreover, the disposition and configuration of said storage means should be favourable to its manipulation, notably in the case of machines of bigger dimensions and for example for expedite substitution thereof, whenever it is required a high number of successive operations, as it occasionally happens in cafeterias and restaurants.

### General description of the invention

The goal of the present invention is to provide a system for preparation of beverages, including coffee of espresso type, tea and similar, by means of extraction of at least one respective precursor edible substance provided in individual portions, including rigid capsules and flexible pods, and presenting at least one system module provided so as to carry out a successive supply of said individual portions to a respective extraction device in the most efficient and reliable way, in particular in view of a use of professional type.

This goal is attained according to the present invention by means of a system for preparation of beverages presenting the features of claim 1. This solution allows reducing the actuation forces required to displace the conduction support and simplifying the mechanisms involved in this displacement.

Moreover, according to the invention, the storage means and respective conduction support are provided so that at least part, preferentially the entire conduction support is moved for the most part, preferentially for its entire displacement, along said vertical alignment, preferentially without change of direction at least between a storage exit and a respective extraction device, preferentially at least until a respective actuation device, so as to make this actuation more effective and efficient, including in terms of the actuation forces required and force moments involved.

According to the invention, said conduction support is displaced by the at least one, in each case respective, actuation device disposed in the proximity of the extraction device, between the storage exit and the extraction device, above the latter. Moreover, the actuation of the conduction support is advantageously adapted for supplying individual portions successively, including in a step-by-step mode between successive previously defined positions.

According to another related inventive aspect, each storage means is disposed in such a way that the respective storage exit is in the proximity, preferentially above of a respective extraction device, and the individual portions are successively supplied along a substantially vertical direction to said extraction device.

Another associated goal of the present invention is to simplify the supply of individual portions without losing reliability.

This goal is attained according to the invention in that the system module is adapted so that the supply of each individual portion to the extraction device, in particular after the actuation device, is carried out at least in part by action of the gravity force. Moreover, it is preferred when the actuation device actuates the conduction support along a substantially horizontal direction, preferentially at least in the proximity of the storage exit.

According to the invention, the system module is provided so as to include means for separation of the individual portion in each case furthest downstream from the respective zone of conduction support, or for separation of the part of the conduction support including the individual portion in each case furthest downstream, disposed between the actuation device and the extraction device, or inside of the latter.

According to an alternative embodiment, said conduction support is displaced from a storage means, passing by an extraction device and being thereafter supplied to a discharge recipient, preferentially without the individual portions.

An associated goal is to propose a system for preparation of beverages presenting a modular structure, including at least one system module presenting at least one storage means for individual portions, provided so as to require less additional construction volume and to provide more flexibility of use, notably in view of different formats and dimensions of said storage means.

This goal is attained according to a first inventive aspect in such a way that each storage means of the system for preparation of beverages presents a substantially regular format, including parallelepiped and cylindrical, with a storage extension that prolongs over at least part, preferentially most part of the depth of the system module, and preferentially with a storage width at least approximately similar to the width of the system module.

According to another inventive aspect, the storage means is provided as integral part of the system module and adapted so as to receive a conduction support, or as transport package comprising a conduction support and adapted so as to be fixed in removable manner to a support provided in the system module.

According to another related inventive aspect, the storage means is disposed in a support adapted for engagement with a corresponding surface, whereby this support is preferentially provided so that it may engage in at least one plane or curved surface of a storage means.

Moreover, the system for preparation of beverages according to the present invention presents several storage means, including of different formats and/or dimensions, adapted so that they may house substantially similar conduction supports and be disposed in such a way that a respective storage exit is in each case in a substantially similar position relative to the extraction device.

According to another preferred embodiment, the storage means is disposed in a respective support by means of inferior and/or side engagement, and/or by means of a drawer-like introduction.

According to another preferred embodiment, the conduction support is provided for engaging, including by means of positive or non-positive union, with an actuation device disposed between the storage exit and the extraction device, so that it is in supply connection relative to a respective extraction device.

According to another preferred embodiment, the storage means is configured as a recipient or package specific to the system module, preferentially substantially gastight, preferentially of multiple use.

According to another preferred embodiment, the conduction support is preferentially configured with a substantially filament or planar format, including in form of mesh, folio or web.

According to another embodiment, the conduction support is actuated from an initial position to a following position by mechanic and/or electro-mechanic actuation means.

In the scope of the present invention as defined in the appended claims, it is considered that the individual portions are provided inside of substantially rigid capsules or of substantially flexible pads, produced from substantially gastight materials or from gas permeable materials.

Moreover, in view of the modular structure of the system for preparation of beverages according to the present invention, each system module is provided with beverage discharge means associated with each, preferentially respective extraction device, and with operation interface means, preferentially provided integrated with said beverage discharge means. Moreover, according to a preferred embodiment, only one system module presents energy and water connection means to external sources of energy and water, as well as may be optionally provided with means for further distribution of energy and water to other system modules. According to another embodiment, the system module presents data transmission means to external data emitters and/or receivers, as well as may be optionally provided with data transmission means to other system modules. Moreover, at least some system modules are provided as machine for preparation of beverages of manual actuation or of automatic actuation, notably by means of a previous introduction or recognition of an external element.

Another goal is to propose a process for efficient operation of a system for preparation of beverages according to the present invention.

This goal is attained according to a process as claimed in claim 11, said process comprising the steps of placing the conduction support with n individual portions in engagement with the actuation device, actuation of the beverage preparation cycle up to n-m times and at most n times, whereby by means of each actuation the conduction support is displaced by a previously defined distance and a respective individual dose that is in each case furthest downstream, is supplied to the extraction device, whereby the displacement of the conduction support is carried out by an actuation device at least to a zone in the proximity of the extraction device, and the supply of the individual dose to the extraction device is carried out at least in part under action of the gravity force.

According to a related inventive aspect, before beginning of the process, the conduction support with n individual portions is introduced in the storage means provided in a system module and/or a storage means including a conduction support with n individual portions is placed in a respective support provided in the system module.

According to another related inventive aspect, when the conduction support is advanced, the individual portion that is in each case furthest downstream is separated from the remaining conduction support, or the part of the conduction support including said individual portion is separated from the remaining, so as to be supplied to the extraction device at least partially under action of the gravity force.

According to another related inventive aspect, the disposition of the storage means in the respective support and the disposition of the conduction support in engagement with the actuation device, are jointly actuated. Moreover, the storage means is removed from respective support after actuation of the extraction device at least n-m times and at most n times.

According to another preferred embodiment, the initialization of the process in a system module unfolds as result of the collection of at least one actuation parameter by means of operation interface means.

According to another preferred embodiment, several data relative to the individual portions in the storage means, at least including the number yet available thereof, preferentially also the type of individual portions, particularly preferentially also an indicator of the time period, may be optionally presented by said operation interface means.

### Description of the figures

The invention shall now be explained in more detail based upon the preferred embodiments and the Figures in annex.

The Figures show in simplified schematic representations:
- Figures 1a - 1b:: a first set of embodiments of a system module (1) in side and frontal views of a system (10) for preparation of beverages according to the invention;
- Figures 2a - 2b:: a second set of embodiments of a system module (1) in side views and respective detail, of a system (10) for preparation of beverages, whereby Figure 2a represents prior art and Figure 2b represents a system (10) according to the invention;
- Figures 3a - 3b:: a third set of embodiments of a system module (1) in side and frontal views, of a system (10) for preparation of beverages according to the invention;
- Figures 4a - 4b:: a fourth set of embodiments of a system module (1) in side and frontal views, of a system (10) for preparation of beverages according to the invention;
- Figures 5a - 5b:: a fifth set of embodiments of a system module (1) in side and frontal views, of a system (10) for preparation of beverages according to the invention;
- Figures 6a - 6b:: frontal views of embodiments of a system (10) for preparation of beverages according to the invention including several system modules (1).

### Detailed description of the invention

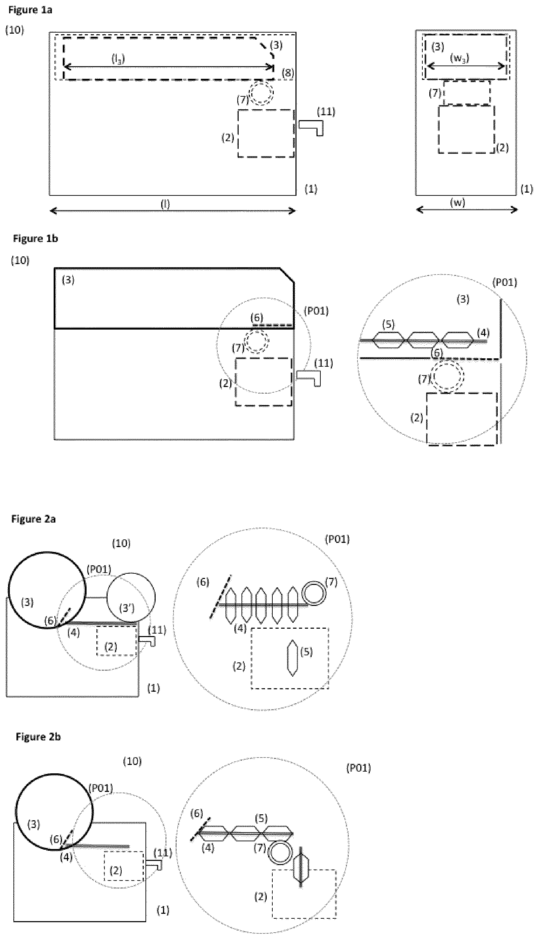

Figure 1a presents side views (on the left) and frontal views (on the right) of a first embodiment of a system module (1) that is part of a system (10) for preparation of beverages according to the present invention, whereas Figure 1b presents a second embodiment in side view (on the left) and respective detail of the supply of portions (on the right). The system module (1) is in each case provided with a storage means (3), in both cases provided as cartridge in form of a transport package, disposed in removable manner and substantially above of a in each case respective, extraction device (2), so as to occupy at least most part of the depth (1) of such a system module (1). The extraction device (2) is in fluid communication with a fluid supply circuit (not represented), for example pressurized water, and with a downstream beverage discharge (11) (schematically represented in the front zone of the extraction device), for discharge of, for example, coffee of espresso type. In case of Figure 1a, it is a storage cartridge (3) adapted so as to be introduced as a sort of drawer in a respective support (8) provided in the chassis of the system module (1) and that receives in its interior a conduction support (4) presenting a plurality of individual doses (5) and disposed in a row along a single horizontal plane (see detail P01 of Figure 1b). The storage cartridge (3) advantageously presents a width (w₃) at least approximately similar to the width (w) of the system module (1). In the case of Figure 1b, it is a storage cartridge (3) disposed upon the top zone of the system module (1) and of depth (l₃) and width (w₃) similar to the one of Figure 1a, but with bigger height so that it can receive a longer conduction support (4), for example disposed in "S" in its interior. Moreover, it is provided an actuation device (7) between the storage exit (6) and the extraction device (2) and disposed in the proximity and substantially above the latter (see detail P01 of Figure 1b).

Figures 2a - representing prior art - and 2b - representing a system (10) according to the invention - are schematic representations equivalent to those of Figures 1a - 1b, whereby in this case the system module (1) is provided with a storage means (3) configured in form of a drum, including one conduction support (4) disposed inside thereof in a roll form and adapted so that it engages with an actuation device (7) and is unrolled by the latter. This embodiment allows a high storage capacity of individual portions in its interior, leaving part of the top zone of the system module (1) free for other relevant uses in the case of a professional utilization, and opening the possibility of configuration of a simple and reliable supply system of the individual portions to a respective extraction device (2).

According to other relevant aspects of the system (10), each storage cartridge (3) is thereby disposed in such a way that the displacement of the conduction support (4) for individual portions (5) unfolds at least substantially along the same vertical plane until arriving at the extraction device (2) of the system module (1) . Moreover, said actuation is carried out by an actuation device (7) at least up to a zone in the proximity, preferentially directly above the extraction device (2). In this position, each individual portion (5) may be separated from the conduction support (4) (see detail P01 of Figure 2a - which corresponds to prior art), or the conduction support (5) is cut so that it falls inside of the extraction device (2) at least in part by action of the gravity force (see detail P01 of Figure 2b - which corresponds to the present invention).

This disposition is particularly advantageous because it allows the actuation of the conduction support (4) to be carried out with less constructive complexity and simpler actuation means, two determinant advantages for a professional type of utilization of the system (10) with eventual peaks of very intense use.

The storage cartridge (3) may be configured as integral part of the system module (1), inside of which there is introduced a certain quantity of individual portions (5) in a respective conduction support (4), as integral part that may temporarily removed from a respective support of cartridge, or as transport package that may be attached to said support of cartridge provided in the system module (1).

Moreover, as visible in both embodiments represented in Figures 1 and 2, the storage cartridge (3) presents in each case one storage exit (6) that, when the former is disposed in a respective support (8), results in the proximity, preferentially in the zone directly above of said extraction device (2).

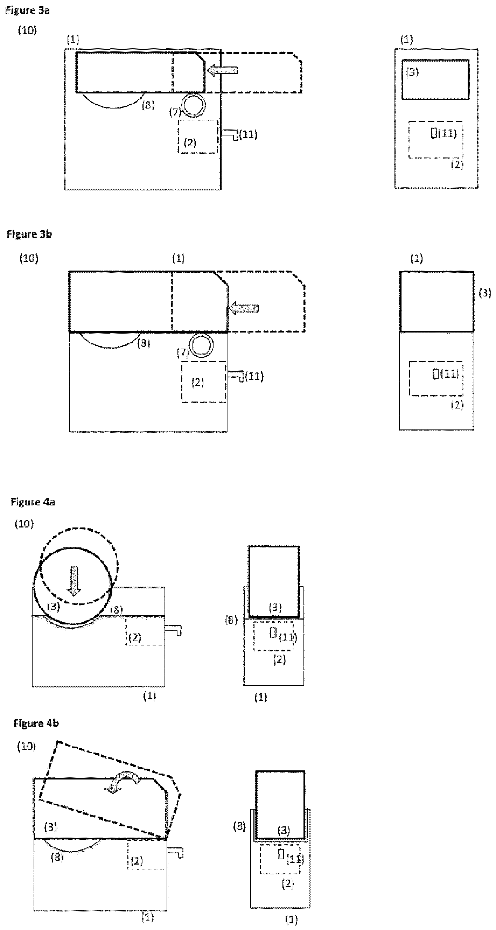

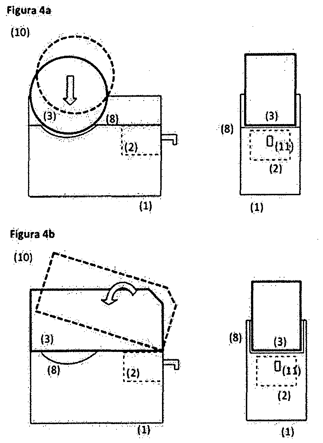

Figures 3a - 3b and 4a - 4b are schematic representations of side views (on the left) and front views (on the right) of a third and fourth set, respectively, of embodiments of a system (10) according to the present invention, including at least one system (1) module provided with a storage cartridge (3), whereby the latter is engaged in removable manner in a respective support (8).

In the case of the embodiments represented in Figures 3a and 3b, said storage cartridge (3) presents at least approximately the form of a box, eventually available in at least two sizes of different dimensions in height, being engaged in an operative position in support (8) by means of a drawer-like introduction (Figure 3a), or engaged in its inferior zone by means of a similar movement.

In the case of a preferred embodiment, the system module (1) presents a support (8) configured in such a way that it allows the optional fixation of a storage cartridge (3) in form of box (Figure 3b) and in form of drum (Figure 4a). Support (8) may be configured as a surface including a linear part and a curved part, so as to provide the possibility of fixation of both embodiments of the storage cartridge (3).

The disposition of the storage cartridge (3) in the superior zone of the system module (1) may also be made by means of a top-down movement (Figure 4a), or by means of a rotation movement (Figure 4b). Moreover, as in the aforementioned embodiments, the support (8) may be configured as an engagement surface (Figure 4a) or as a sort of drawer, at least partial (Figure 4b).

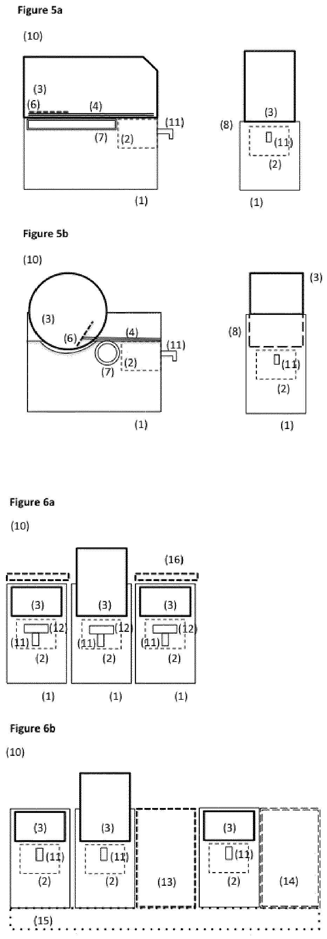

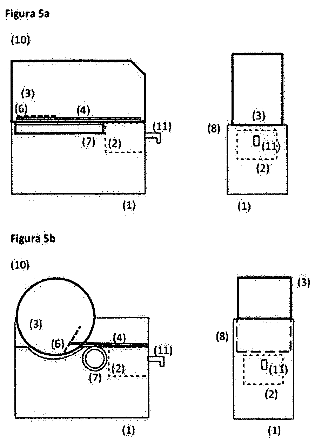

Figures 5a and 5b are schematic representations of side views, partially in cut, of other embodiments of a system module (1) including a storage cartridge (3) for successively supplying individual portions to a respective extraction device (2).

According to another aspect, the conduction support (4) is actuated from the interior of a respective storage cartridge (3) by means of at least one actuation device (7) disposed in the proximity of the storage exit (6) (Figure 5a) and/or in the proximity of the extraction device (2) (Figure 5b). Moreover, the actuation device (7) is configured so that it engages with the conduction support (4) along a path, notably between at least part of a distance between the storage exit (6) and the extraction device (2) (Figure 5a), or only in one place, notably in the immediate proximity of the extraction device (2) (Figure 5b) .

The conduction support (4) is preferentially configured in a substantially filamentary or planar format, including in form of thread, of mesh or web. The engagement of the actuation device (7) with the conduction support (4) may be carried out in mechanic manner, notably by means of engagement with peripheral zones of the individual portions (5), or by means of electromagnetic actuation of at least part of said conduction support (4). Moreover, during the supply of an extraction device (2), the individual portions (5) may be detached by means of separation by cut from the remanding conduction support (4) upstream, or by means of pressing them out of the respective conduction support (4).

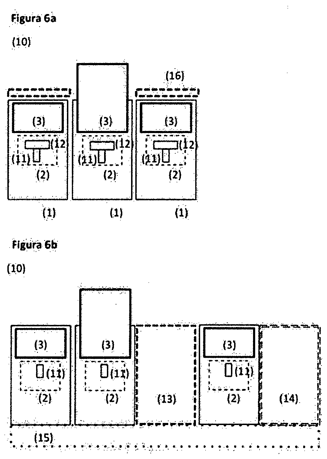

Figures 6a and 6b show schematic representations in front view of embodiments of systems (10) for preparation of beverages according to the present invention, particularly appropriate for a utilization of the professional type, as in cafeterias and restaurants. As it can be seen in Figure 6a, the system (10) presents two system modules (1), preferentially presenting substantially similar overall dimensions, and provided in each case with one extraction device (2) in fluid communication with respective beverage discharge means (11), and one storage cartridge (3) in supply connection of individual portions (5) to said extraction device.

In a preferred embodiment, each system module (1) presents operation interface means (12) that provide the possibility of actuation and of data presentation relevant to the operation. According to another particularly preferred embodiment, said operation interface means (12) are at least partially integrated with the beverage discharge means (11).

In another preferred embodiment, only one of the system modules (1) (designated by "master" module) is provided with connection means to external sources of energy and water, whereby these are further distributed to additional system modules (1). In a similar manner, only the "master" system module (1) is provided with data transmission means to external data emitters and/or receivers relative to the system (10) of modules.

As it can be verified in Figure 6b, the system according to the invention may also include other modules not including an extraction device (2), and dedicated to other functions that are relevant for the final utilization intended in each case, such as for example steam production modules (13), cups storage modules (14), milk or water recipients and other. Moreover, the different system modules (1) may be disposed on top of a respective support (15) of modules that is advantageously configured so as to receive means for collection of used liquids, or similar. They may further present elements (16) for keeping cups warm.

## Claims

1. System (10) for preparation of beverages presenting at least one system module (1) that comprises
- at least one extraction device (2) preferentially disposed in a frontal zone of the system module (1), and
- at least one storage means (3) provided so as to comprise a conduction support (4) that presents a plurality of individual doses (5) and adapted so as to be moved from outside of said storage means (3) and successively supply these individual doses (5) to one, in each case respective, said extraction device (2), whereby each storage means (3) and respective conduction support (4) are provided so that the conduction support (4) results substantially vertically aligned with a respective said extraction device (2), above thereof, and
- whereby said storage means (3) and respective conduction support (4) are provided so that the conduction support (4) is moved along said vertical alignment, between a storage exit (6) and until said extraction device (2), preferentially at least until a respective actuation device (7),
**characterized**
**in that** said conduction support (4) is displaced by means of said respective actuation device (7) disposed in the proximity of the extraction device (2), between the storage exit (6) and a respective said extraction device (2), substantially above the latter, and in that said system module (1) is provided so as to include means for separation of the individual dose (5) in each case furthest downstream from the conduction support (4), disposed between the actuation device (7) and the extraction device (2) or inside of the latter.

2. System according to claim 1, **characterized in that** each storage means (3) is disposed in such a way that a respective storage exit (6) is in the proximity, preferentially above, of a respective extraction device (2) and the individual doses (5) are successively supplied along a substantially vertical direction to said extraction device (2).

3. System according to claim 1 or 2, **characterized in that** the system module (1) is adapted so that the supply of each individual dose (5) to the extraction device (2), in particular after the actuation device (7), is carried out at least in part under the action of the gravity force.

4. System according to any one of the previous claims 1 to 3, **characterized in that** the storage means (3) presents a substantially regular format, including parallelepiped and cylindrical, with a storage extension (l₃) that prolongs itself over at least part, preferentially most part of the module depth (1) of the system module (1), and preferentially with a storage width (w₃) at least approximately similar to the module width (w) of the system module (1).

5. System according to any one of the previous claims 1 to 4, **characterized in that** the storage means (3) is provided as integral part of the system module (1) and adapted so as to house a conduction support (4) or as a transport package comprising a conduction support (4) and adapted so as to be attached in removable manner to a support (8) provided in the system module (1) .

6. System according to any one of the previous claims 1 to 5, **characterized in that** the storage means (3) is disposed in a support (8) adapted for engagement with a corresponding surface thereof, whereby this support (8) is preferentially provided so as to engage in at least one plane or curved surface of a storage means (3).

7. System according to any one of the previous claims, **characterized in that** there are provided storage means (3) of different formats and/or dimensions, adapted so that they may house substantially similar conduction supports (4) and be disposed in such a way that a respective storage exit (6) is in a position in each case substantially similar relative to the extraction device (2).

8. System according to any one of the previous claims, **characterized in that** the conduction support (4) is provided so as to engage, including by means of positive or non-positive union in a traction resistant manner, with a respective actuation device (7), so that it results in a supply connection relative to a respective extraction device (2) .

9. System according to any one of the previous claims, **characterized in that** the conduction support (4) is actuated by the actuation device (7) at least along a substantially horizontal direction, preferentially at least in the proximity upstream from the storage exit (6).

10. System according to any one of the previous claims, **characterized in that** only one of the system modules (1) presents energy and water connection means to external sources of energy and water, as well as is adapted to being optionally provided with means for further energy and water distribution to remaining system modules (1).

11. Process for preparation of beverages by means of successive supplying individual doses of edible substances in a system (10) for preparation of beverages according to any one of the previous claims 1 to 10, comprising the steps:
- placing the conduction support (4) with n individual doses (5) in engagement with the actuation device (7),
- actuation of a beverage preparation cycle up to n-m times and at most n times, so that in each actuation the conduction support (4) is displaced by a previously defined distance and a respective individual dose (5) in each case furthest downstream is supplied to the extraction device (2),
**characterized**
**in that** the displacement of the conduction support (4) is carried out by an actuation device (7) at least to a zone in the proximity above of the extraction device (2), whereby the supply of the individual dose (5) to the extraction device (2) is carried out at least partially under action of the gravity force.

12. Process according to claim 11, **characterized in that** it further includes the following steps:
- introduction of the conduction support (4) with n individual doses (5) in the storage means (3) provided in the system module (1) and/or
- placement of a storage means (3) including a conduction support (4) with n individual doses (5), in removable engagement with a respective support (8) provided in the system module (1).

13. Process according to claim 11 or 12, **characterized in that** when the conduction support (4) is displaced, the individual dose (5) that is in each case furthest downstream is separated from the remaining conduction support (4) or the part of the conduction support (4) including said individual dose (5) is separated from the remaining, so as to be supplied to the extraction device (2).

14. Process according to claims 11 to 13, **characterized in that** the storage means (3) is removed from the respective support (8) after use of the respective total of individual doses (5).

## Patentansprüche

1. System (10) zur Zubereitung von Getränken darstellend mindestens ein Systemmodul (1) umfassend
- mindestens ein Absauggerät (2), vorzugsweise angeordnet in einer frontalen Zone des Systemmoduls (1), und
- mindestens ein Speichermittel (3) so vorhanden, um eine Leitungsstütze (4) zu umfassen, die eine Mehrzahl von Einzelmengen (5) und so angepasst, um von außerhalb des Speichermittels (3) bewegt zu werden und aufeinanderfolgend diese Einzelmengen (5) in eine zu versorgen, in jedem Fall entsprechend, genanntes Absauggerät (2), wobei jedes Speichermittel (3) und entsprechende Leitungsstütze (4) so vorhanden sind, dass die Leitungsstütze (4) wesentlich senkrecht fixiert mit einem entsprechenden genannten Absauggerät (2) erfolgt, oberhalb davon, und
- wobei genanntes Speichermittel (3) und entsprechende Leitungsstütze (4) so vorhanden sind, dass die Leitungsstütze (4) entlang genannte senkrechte Fixierung bewegt werden kann, zwischen einem Speicherausgang (6) und bis genanntem Absauggerät (2), vorzugsweise mindestens bis einem entsprechenden Betätigungsgerät (7), **dadurch gekennzeichnet,**
**dass** genannte Leitungsstütze (4) mittels genanntem Betätigungsgerät (7) versetzt ist, angeordnet in der Nähe vom Absauggerät (2), zwischen dem Speicherausgang (6) und einem entsprechenden genannten Absauggerät (2), wesentlich oberhalb des Letzteren, und dass genanntes Systemmodul (1) so vorhanden ist, um Mittel zur Trennung der Einzelmengen (5) in jedem Fall weiterhin stromabwärts von der Leitungsstütze (4) einzuschließen, angeordnet zwischen dem Betätigungsgerät (7) und dem Absauggerät (2) oder innerhalb des Letzteren.

2. System gemäß Anspruch 1 **dadurch gekennzeichnet, dass** jedes Speichermittel (3) derart angeordnet ist, dass ein entsprechender Speicherausgang (6) in der Nähe ist, vorzugsweise oberhalb, von einem entsprechenden Absauggerät (2) und den Einzelmengen (5) entlang einer wesentlich senkrechten Richtung zu genanntem Absauggerät (2) aufeinanderfolgend versorgt sind.

3. System gemäß Anspruch 1 oder 2 **dadurch gekennzeichnet, dass** das Systemmodul (1) so angepasst ist, dass die Versorgung von jeder Einzelmenge (5) zum Absauggerät (2), insbesondere nach dem Betätigungsgerät (7), mindestens unterhalb der Wirkung der Schwerkraft durchgeführt ist.

4. System gemäß einer der vorigen Ansprüche 1 bis 3 **dadurch gekennzeichnet, dass** das Speichermittel (3) ein wesentlich regelmäßiges darstellt, einschließlich quaderförmig und zylindrisch, mit einer Speicherverlängerung (1₃), die sich selbst oberhalb mindestens teils, vorzugsweise größtenteils der Modultiefe (1) vom Systemmodul (1) ausdehnt, und vorzugsweise mit einer Speicherbreite (w₃) mindestens ungefähr ähnlich zur Modulbreite (w) vom Systemmodul (1).

5. System gemäß einer der vorigen Ansprüche 1 bis 4 **dadurch gekennzeichnet, dass** das Speichermittel (3) als fester Bestandteil vom Systemmodul (1) versorgt und so angepasst ist, um eine Leitungsstütze (4) oder als Transportpackung umfassend eine Leitungsstütze (4) zu unterbringen und so angepasst, um in beweglicher Art zu einer Stütze (8) vorhanden im Systemmodul (1) angehängt zu werden.

6. System gemäß einer der vorigen Ansprüche 1 bis 5 **dadurch gekennzeichnet, dass** das Speichermittel (3) in einer Stütze (8) angeordnet ist, angepasst zur Kupplung mit einer entsprechenden Oberfläche davon, wobei diese Stütze (8) vorzugsweise so versorgt ist, um mindestens in einer ebenen oder winkligen Oberfläche eines Speichermittels (3) zu kuppeln.

7. System gemäß einer der vorigen Ansprüche **dadurch gekennzeichnet, dass** Speichermittel (3) vorhanden sind aus verschiedenen Formaten und/oder Dimensionen so angepasst, dass sie wesentlich ähnliche Leitungsstützen (4) unterbringen könnten und derart angeordnet sein, dass ein entsprechender Speicherausgang (6) in einer Position in jedem Fall wesentlich ähnlich gegenüber dem Absauggerät (2) ist.

8. System gemäß einer der vorigen Ansprüche **dadurch gekennzeichnet, dass** die Leitungsstütze (4) so vorhanden ist, einschließlich mittels positiver oder nicht-positiver Verbindung in einer Beständigkeitsart, um mit einem entsprechenden Betätigungsgerät (7) zu kuppeln, so dass es in einer Versorgungsverbindung gegenüber einem entsprechenden Absauggerät (2) erfolgt.

9. System gemäß einer der vorigen Ansprüche **dadurch gekennzeichnet, dass** die Leitungsstütze (4) mittels des Betätigungsgeräts (7) mindestens entlang einer wesentlich waagerechten Richtung betätigt wird, vorzugsweise mindestens in der Nähe stromaufwärts vom Speicherausgang (6).

10. System gemäß einer der vorigen Ansprüche **dadurch gekennzeichnet, dass** nur ein der Systemmodule (1) Energie- und Wasserverbindungsmittel zu äußerlichen Energie- und Wasserquellen darstellt, sowie auch angepasst, um wahlweise mit Mitteln zu weiterer Energie- und Wasserverteilung zu den restlichen Systemmodulen (1) vorhanden zu sein.

11. Verfahren zur Zubereitung von Getränken mittels aufeinanderfolgender Versorgung von Einzelmengen von essbaren Substanzen in einem System (1) zur Getränkezubereitung gemäß einer der vorigen Ansprüche 1 bis 10, umfassend folgende Schritte:
- Einbau der Leitungsstütze (4) mit n Einzelmengen (5) in Kupplung mit dem Betätigungsgerät (7),
- Betätigung eines Getränkezubereitungszyklus bis zu n-m Male und meistens n Male, so dass in jeder Betätigung die Leitungsstütze (4) mittels einer vorher definierten Richtung und einer entsprechenden Einzelmenge versetzt ist, in jedem Fall am weitesten stromabwärts (5) zum Absauggerät (2) versorgt ist,
**dadurch gekennzeichnet, dass** die Versetzung der Leitungsstütze (4) mittels einem Betätigungsgerät (7) mindestens zu einer Zone in der Nähe oberhalb des Absauggerätes (2) durchgeführt ist, wobei die Versorgung der Einzelmengen (5) zum Absauggerät (2) mindestens teils unter Wirkung der Schwerkraft durchgeführt ist.

12. Verfahren gemäß Anspruch 11 **dadurch gekennzeichnet, dass** es weiterhin die folgenden Schritte einschließt:
- Einführung der Leitungsstütze (4) mit n Einzelmengen (5) im Speichermittel (3) vorhanden im Systemmodul (1) und/ oder
- Einbau eines Speichermittels (3) einschließlich einer Leitungsstütze (4) mit n Einzelmengen (5), in beweglicher Kupplung mit einer entsprechenden Stütze (8) vorhanden im Systemmodul (1).

13. Verfahren gemäß Anspruch 11 oder 12 **dadurch gekennzeichnet, dass** wenn die Leitungsstütze (4) versetzt ist die Einzelmenge (5), die in jedem Fall am weitesten stromabwärts ist, von der restlichen Leitungsstütze (4) oder vom Teil der Leitungsstütze (4) einschließlich genannte Einzelmenge (5) von der restlichen getrennt ist, so um das Absauggerät (2) zu versorgen.

14. Verfahren gemäß Ansprüche 11 bis 13 **dadurch gekennzeichnet, dass** das Speichermittel (3) von der entsprechenden Stütze (8) nach Anwendung der entsprechenden Gesamtheit der Einzelmengen (5) entfernt ist.

## Revendications

1. Système (10) pour la préparation de breuvages présentant au moins un module de système (1) comprenant
- au moins un dispositif d'extraction (2) de préférence disposé dans une zone frontale du module de système (1) et
- au moins un moyen de stockage (3) fourni afin de comprendre un support de conduction (4) qui présente une pluralité de doses individuelles (5) et adapté afin qu'il soit déplacé depuis l'extérieur dudit moyen de stockage (3) et de fournir successivement ces doses individuelles (5) vers une, dans chaque case respective, dudit dispositif d'extraction (2), où chaque moyen de stockage (3) et le support de conduction respectif (4) sont fournis afin que les support de conduction (4) finisse substantiellement verticalement aligné avec ledit dispositif d'extraction (2), sur celui-ci, et
- Où ledit moyen de stockage (3) et le support de conduction respectif (4) sont fournis afin que le support de conduction (4) soit déplacé le long dudit alignement vertical, entre une sortie de stockage (6) jusqu'au dit dispositif d'extraction (2), de préférence au moins jusqu'au dispositif d'actionnement respectif (7),
**caractérisé par le fait que**
le support de conduction (4) est déplacé au moyen dudit dispositif d'actionnement respectif (7), disposé à proximité du dispositif d'extraction (2), entre la sortie de stockage (6) et ledit dispositif d'extraction respectif (2), substantiellement au-dessus de ce dernier et dans ledit module de système (1) il est fourni de manière à inclure des moyens pour la séparation de la dose individuelle (5) dans chaque case le plus en aval possible du support de conduction (4), disposé entre le dispositif d'actionnement (7) et le dispositif d'extraction (2) ou à l'intérieur de ce dernier.

2. Système selon la revendication 1, **caractérisé par le fait que** chaque moyen de stockage (3) est disposé de telle manière que la sortie de stockage respective (6) est à proximité de préférence au-dessus, d'un dispositif d'extraction respectif (2) et les doses individuelles (5) sont successivement fournies le long d'une direction substantiellement verticale vers ledit dispositif d'extraction (2).

3. Système selon la revendication 1 ou 2, **caractérisé par le fait que** le module de système (1) est adapté afin que la fourniture de chaque dose individuelle (5) vers le dispositif d'extraction (2), en particulier après que le dispositif d'actionnement (7) soit mené, au moins en partie, par l'action de la force de la gravité.

4. Système selon une quelconque revendication précédente entre 1 et 3, **caractérisé par le fait que** le moyen de stockage (3) présente un format substantiellement régulier, y compris parallélépipédique et cylindrique, avec une extension du stockage (l₃) qui se prolonge sur au moins une partie, de préférence la plupart de la profondeur du module (1) du module de système (1) et de préférence avec une largeur du stockage (w₃) au moins approximativement similaire à la largeur (w) du module de système (1).

5. Système selon une quelconque revendication précédente entre 1 et 4, **caractérisé par le fait que** le moyen de stockage (3) est fourni en tant que partie intégrale du système de module (1) et adapté afin de loger un support de conduction (4) ou en tant que paquet de transport comprenant un support de conduction (4) et adapté afin d'être attaché de manière amovible à un support (8) fourni dans le module de système (1) .

6. Système selon une quelconque revendication précédente entre 1 et 5, **caractérisé par le fait que** le moyen de stockage (3) est disposé sur un support (8) adapté à l'engagement avec une surface correspondante de celui-ci, où ce support (8) est de préférence fourni afin de l'engager dans au moins une surface plane ou courbée d'un moyen de stockage (3).

7. Système selon une quelconque revendication précédente, **caractérisé par le fait que** sont fournis des moyens de stockage (3) de différents formats et /ou dimensions, adaptés afin qu'ils puissent loger des supports de conduction substantiellement similaires (4) et être disposés de telle manière qu'une sortie de stockage respective (6) soit en position dans chaque case substantiellement similaire relativement au dispositif d'extraction (2).

8. Système selon une quelconque revendication précédente, **caractérisé par le fait que** le support de conduction (4) est fourni afin d'engager, y compris au moyen d'union non-positive ou positive d'une façon résistante à la traction, avec un dispositif d'actionnement respectif (7) afin qu'il résulte en une connexion de l'alimentation relativement à un dispositif d'extraction respectif (2).

9. Système selon une quelconque revendication précédente, **caractérisé par le fait que** le support de conduction (4) est actionné par le dispositif d'actionnement (7) au moins le long d'une direction substantiellement horizontale, de préférence au moins à proximité, en amont de la sortie de stockage (6).

10. Système selon une quelconque revendication précédente, **caractérisé par le fait que** seul un des modules du système (1) présente des moyens de connexion d'eau et d'énergie aux sources externes d'énergie et d'eau, étant ainsi adapté au fait d'être optionnellement fourni de moyens pour davantage de distribution d'énergie et d'eau vers les autres modules de système (1).

11. Processus de préparation de breuvages au moyen de doses individuelles d'approvisionnement successif de substances comestibles dans un système (10) de préparation de breuvages selon une quelconque revendication précédente entre 1 et 10, comprenant les étapes suivantes :
- Placer le support de conduction (4) avec n doses individuelles (5) en engagement avec le dispositif d'actionnement (7),
- Actionner un cycle de préparation de breuvage jusqu'à n-m fois et au plus, n fois, afin qu'à chaque actionnement, le support de conduction (4) soit déplacé par une distance préalablement définie et une dose individuelle respective (5) dans chaque case, le plus en aval est fourni par le dispositif d'extraction (2),
**caractérisé par le fait que**
le déplacement du support de la conduction (4) est mené par un dispositif d'actionnement (7) au moins vers une zone à proximité du dessus du dispositif d'extraction (2), où la fourniture de la dose individuelle (5) vers le dispositif d'extraction (2) est mené au moins partiellement sous l'action de la force de gravité.

12. Processus selon la revendication 11, **caractérisé par le fait qu'**il inclut en plus les étapes suivantes :
- Introduction du support de conduction (4) avec n doses individuelles (5) dans le moyen de stockage (3) fourni dans le module de système (1) et/ou
- Placement du moyen de stockage (3) y compris un support de conduction (4) avec n doses individuelles (5), dans un engagement amovible avec un support respectif (8) fourni dans le module de système (1).

13. Processus selon la revendication 11 ou 12, **caractérisé par le fait que** lorsque le support de conduction (4) est déplacé, la dose individuelle (5) qui est dans chaque case le plus en aval est séparée du support de conduction restant (4) ou d'une partie du support de conduction (4), y compris ladite dose individuelle (5) qui est séparée du reste, afin d'être fournie au dispositif d'extraction (2).

14. Processus selon les revendications 11 à 13, **caractérisé par le fait que** le moyen de stockage (3) est retiré du support respectif (8) après utilisation du total respectif des doses individuelles (5).
